# EUROPEAN PATENT APPLICATION

(11) **EP 1 818 714 A1**
(43) Date of publication of application: **15.08.2007**
(21) Application number: 07002720.6
(22) Date of filing: 08.02.2007
(51) Int. Cl.: G02F 1/13357, G09G 3/34

(54) **Display**

(30) Priority: 10.02.2006 JP 2006034328
(71) Applicant: Sanyo Epson Imaging Devices Corporation, Tokyo 105-6115 (JP)
(72) Inventor: Kunimori, Takashi c/o Sanyo Epson Imaging, Tottori-shi Tottori-ken 680-8577 (JP); Sano, Yutaka c/o Sanyo Epson Imaging Dev. Corp., Tottori-shi Tottori-ken 680-8577 (JP); Yasumori, Masanori c/o Sanyo Epson Imaging, Tottori-shi Tottori-ken 680-8577 (JP); Tanaka, Toshihiko c/o Sanyo Epson Imaging, Tottori-shi Tottori-ken 680-8577 (JP)
(74) Representative: HOFFMANN EITLE

(57) **Abstract**

A display 10 according to one embodiment of the invention includes a display panel having an active matrix substrate and a color filter substrate, a lighting unit for the display, panel, ambient light photosensors 32₁ to 32₆, a controller that controls luminous intensity of the lighting unit based on outputs from the ambient light photosensors 32₁ to 32₆, and a spectral sensitivity adjustor provided at a position on the color filter substrate corresponding to the ambient light photosensors 32₁ to 32₆ in order to make the spectral sensitivity of the ambient light photosensors 32₁ to 32₆ match human visual sensitivity. The spectral sensitivity adjustor may be a color filter or a polarizing filter. The display thus structured automatically and stably controls on/off of its backlights depending on the brightness of the surroundings with a sensitivity corresponding to human visual sensitivity.

## Description

### FIELD OF THE INVENTION

The present invention relates to a display, particularly to a display that has a light source, such as a backlight and front light, for automatically changing the brightness level of the light source without malfunction depending on the brightness of outside light with a sensitivity corresponding to human visual sensitivity.

### BACKGROUND OF THE INVENTION

The use of liquid crystal displays (LCD) has been widespread not only for information and communications devices but also general electric appliances. Among them, reflective LCDs that require no back or side lights (hereinafter collectively referred to as "backlights"), unlike transmissive LCDs, have been widely used for mobile applications in order to reduce power consumption. Since the reflective LCDs use outside light as their light source, they present poor display visibility in a dark room. To address this problem, there have been developed reflective LCDs employing front lights (see JP-A-2002-131742, claims, Figs. 1 to 3) and semi-transmissive LCDs having a combination of characteristics of transmissive and reflective LCDs (see JP-A-2001-350158, claims, Fig. 4).

For example, reflective LCDs employing front lights display images by turning on their front lights in dark places and by using outside light without using the front lights in bright places. There is no need to keep the front lights on, whereby power consumption can be significantly low. Semi-transmissive LCDs have a transmissive part with a transmissive electrode and a reflective part with a reflective electrode in each of their pixels. They display images by using the transmissive part in each pixel with their backlights turned on in dark places and by using the reflective part bringing in outside light without turning on the backlights in bright places. There is again no need to keep the backlights on, whereby power consumption can be significantly low.

Such reflective LCDs and semi-transmissive LCDs have variable visibility depending on the intensity of outside light. To ensure a highly visible display, the end user needs to take the trouble to turn on or off the backlights or front light or lower the light level after deciding whether to turn on the backlights or front light according to the intensity of outside light. Here, the end user may unnecessarily turn on the backlights or front light even when sufficient outside light is available. When this happens, waste power consumption increases to cause quick battery drain in cellular phones and other mobile appliances.

To address this problem, some related art examples are known in which a ambient light photosensor is provided to an LCD in order to detect the intensity of outside light and control on/off of backlights according to the detection results (see JP-A-2002-131719, JP-A-2003-215534, and JP-A-2004-007237).

For example, JP-A-2002-131719 discloses an LCD having a thin-film field effect transistor (TFT) photodetector as a ambient light photosensor on an LCD panel substrate and detecting photo-leakage current from the TFT, thereby automatically turning on/off the backlights depending on the brightness of the surroundings.

JP-A-2003-215534 discloses an LCD having a photodiode as a ambient light photosensor and providing light-emitting diodes serving as its backlights with temperature-compensated current depending on the brightness of the surroundings.

JP-A-2004-007237 discloses a mobile terminal having a light-emitting diode functioning as both a backlight- and device-operation indicator and a ambient light photosensor and controlling on/off of the backlights based on the electromotive force of the diode depending on the brightness of the surroundings.

Since the related art LCDs that detect surrounding brightness with their ambient light photosensors so as to automatically turn on/off their backlights are installed in small cellular phones or other mobile appliances, they typically have a single ambient light photosensor located in an unoccupied area in the appliances to detect surrounding brightness. The backlights are automatically turned on/off at a brightness value predetermined based on the output of the ambient light photosensor.

Spectral sensitivity characteristics of the ambient light photosensors included in such related art LCDs, however, do not necessarily match human visual sensitivity characteristics. For example, under mercury lamps, which emit light containing a high percentage of short-wavelength components that may be sensed by the ambient light photosensors but visually perceived as dark, the backlights may not be always turned on/off in a desirable manner.

### SUMMARY

In consideration of the problems involved in the related art displays having ambient light photosensors to detect the brightness of the surroundings and automatically turn on/off their backlights, the present invention provides a display that automatically and stably controls on/off of its backlights depending on surrounding brightness with a sensitivity corresponding to human visual sensitivity.

In view of the above-described issue, a display according to one aspect of the present invention includes a display panel having an active matrix substrate and a color filter substrate, a lighting unit for the display panel, a ambient light photosensor, a controller that controls luminous intensity of the lighting unit based on an output from the ambient light photosensor, and a spectral sensitivity adjustor for the ambient light photosensor provided at a position on the color filter substrate corresponding to the ambient light photosensor.

In this display, the spectral sensitivity adjustor may be a color filter layer.

In this display, the color filter layer may be in a combination of colors provided for each pixel within a display area on the display panel.

In this display, the color filter layer may be in one of the colors provided for each pixel within a display area on the display panel.

In this display, the spectral sensitivity adjustor may be a polarizing filter layer.

In this display, the spectral sensitivity adjustor may be a combination of a color filter layer and a polarizing filter layer.

In this display, the color filter layer may be in a combination of colors provided for each pixel within a display area on the display panel.

In this display, the color filter layer may be in one of the colors provided for each pixel within a display area on the display panel.

In this display, the ambient light photosensor may include a plurality of thin-film field effect transistors, in each of which a source electrode, a gate electrode, and a drain electrode are coupled in parallel to each other, a capacitor is coupled between the source electrode and the drain electrode, and a switching element is coupled between the source electrode and a predetermined constant voltage source.

In this display, the lighting unit may be a backlight or a side light, and the display may be a transmissive liquid crystal display or a semi-transmissive liquid crystal display.

In this display, the lighting unit may be a front light, and the display may be a reflective liquid crystal display.

The features described above provide the following advantages. According to the above-referenced features, a spectral sensitivity adjustor for making the spectral sensitivity of the ambient light photosensor match human visual sensitivity is provided at a position on the color filter substrate corresponding to the ambient light photosensor. Accordingly, malfunction under mercury lamps, which emit light sensed by the ambient light photosensor but visually perceived as dark, can be prevented, for example.

As the ambient light photosensor, an appropriate photoelectric conversion element may be selected among publicly known photodiodes, phototransistors, thin-film transistor photodetectors (TFT ambient light photosensors), photo-SCRs, photoconductors, and photocells. As the spectral sensitivity adjustor for making the spectral sensitivity of the ambient light photosensor match human visual sensitivity, an appropriate adjustor may be selected depending on the spectral sensitivity of the ambient light photosensor.

According to the above-referenced features, the color filter layer included in the display can be used to easily and economically adjust the spectral sensitivity of the ambient light photosensor to almost match human visual sensitivity.

According to the above-referenced features, the color filter layer serving as the spectral sensitivity adjustor is in the same color as the color filter layer within the display area included in the display, whereby the spectral sensitivity adjustor can be economically provided. Furthermore, by using one of or an appropriate combination of the colors of the color filter layer, the characteristics of the ambient light photosensor can be properly adjusted depending on its spectral sensitivity to almost match human visual sensitivity.

According to the above-referenced features, since generally available polarizing filters do not transmit short-wavelength light, malfunction can be prevented even with a ambient light photosensor that senses short-wavelength light emitted by mercury lamps, for example, since its spectral sensitivity is made to almost match human visual sensitivity.

According to the above-referenced features, by using an appropriate combination of the spectral sensitivity characteristics of the color filter layer and of the polarizing filter layer, the characteristics of the ambient light photosensor can be properly adjusted to almost match human visual sensitivity.

According to the above-referenced features, the color filter layer serving as the spectral sensitivity adjustor is in the same color as the color filter layer within the display area included in the display, whereby the spectral sensitivity adjustor can be economically provided. Furthermore, by using one of or an appropriate combination of the colors of the color filter layer, the characteristics of the ambient light photosensor can be properly adjusted depending on its spectral sensitivity to almost match human visual sensitivity.

According to the above-referenced features, a thin-film transistor (TFT) serving as the ambient light photosensor, a capacitor, and a switching element can be manufactured together with another thin-film transistor (TFT) serving as a switching element for the active-matrix substrate. Consequently, there is no need for a separate step to provide the TFT serving as the ambient light photosensor, the capacitor, and the switching element. Furthermore, these three components are so small and easy to provide on the periphery of the display area on the display panel that there is no need to have a large display panel.

Moreover, the above-referenced advantages are available for any of the transmissive LCDs, semi- transmissive LCDs, and reflective LCDs.

### BRIEF DESCRIPTION OF THE DRAWINGS

Fig. 1 shows an example of the voltage-current curve of a TFT ambient light photosensor.
Fig. 2 is a circuit diagram of a photodetector unit using the TFT ambient light photosensor.
Fig. 3 shows the voltage-time curve at both ends of a capacitor included in the circuit diagram of Fig. 2 with different brightness levels.
Fig. 4 is a plan view showing a single pixel seen through a color filter substrate included in a semi-transmissive liquid crystal display (LCD).
Fig. 5 is a sectional view along the line A-A of Fig. 4 with the color filter substrate removed.
Fig. 6 is a plan view of the semi-transmissive LCD according to one embodiment of the invention.
Fig. 7 is a sectional view of the photodetector unit.
Fig. 8 shows human visual sensitivity.
Fig. 9 shows the spectral sensitivity of ambient light photosensors according to the embodiment.
Fig. 10 shows the spectral transmittance of R, G, and B color filters included in an LCD panel.
Fig. 11 shows the spectral transmittance of a polarizing filter.
Fig. 12 shows the spectral sensitivity of the ambient light photosensors according to the embodiment that is compensated by the G color filter and the polarizing filter.
Fig. 13A is a plan view of the semi-transmissive LCD including color filter layers according to the embodiment, Fig. 13B is an enlarged view of the color filters on the ambient light photosensors shown in Fig. 13A, and Figs. 13C to 13G show modifications of Fig. 13B.
Fig. 14 is a circuit diagram showing an example of electrical coupling of a plurality of photodetector units.
Fig. 15 shows a modified example of the circuit diagram of Fig. 14.
Fig. 16 shows a modified example of the semi-transmissive LCD shown in Fig. 6.
Fig. 17 is a block diagram of a backlight control unit.

### DESCRIPTION OF THE PREFERRED EMBODIMENTS

Preferred embodiments will be now described with reference to the accompanying drawings. It should be noted that the description below is given to illustrate a semi-transmissive liquid crystal display (LCD) as an example of an active-matrix display that embodies the concept of the invention. Various changes and modifications can be made without departing from the spirit and scope of the claims appended hereto.

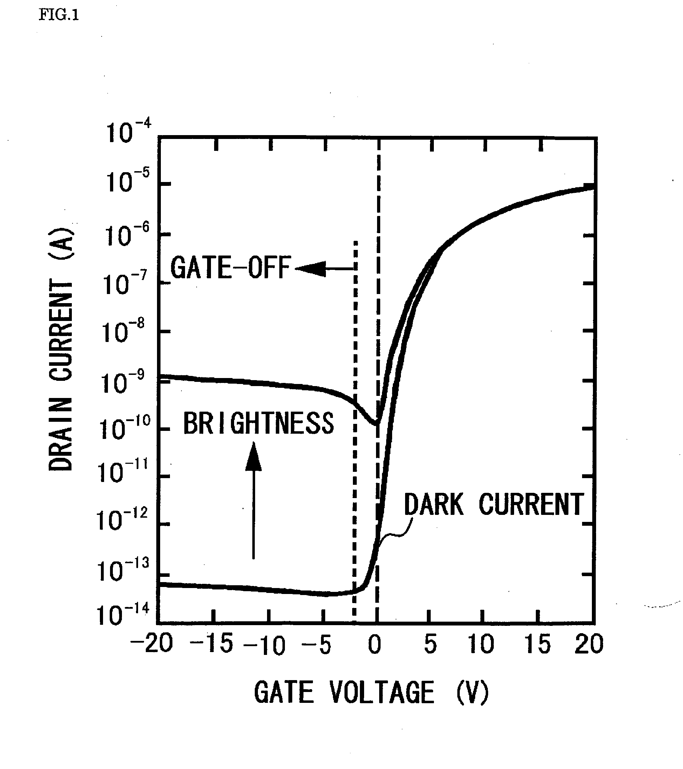

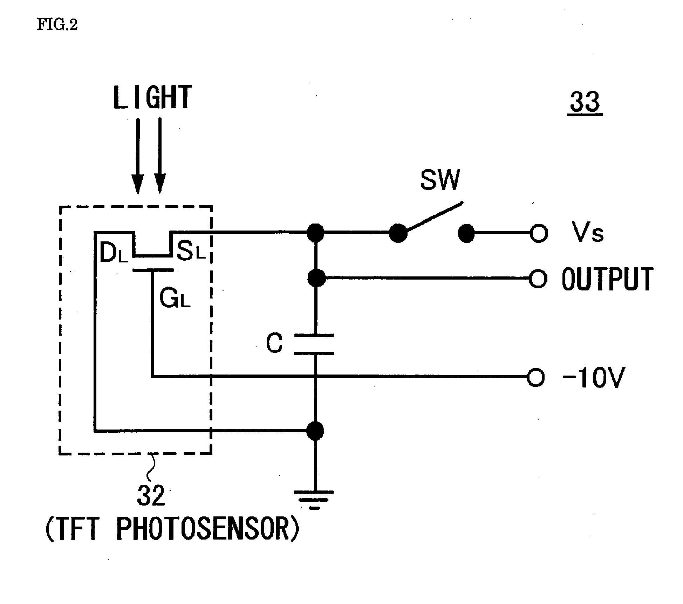

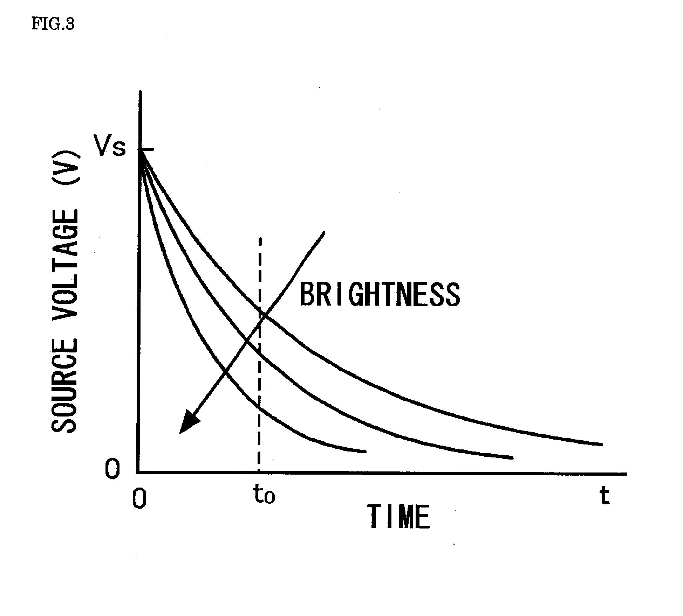

Referring to Figs. 1 through 3, the operation principle of a thin-film transistor as a ambient light photosensor (hereinafter referred to as the "TFT ambient light photosensor") and a driving circuit will be described. Fig. 1 shows an example of the voltage-current curve of the TFT ambient light photosensor. Fig. 2 is a circuit diagram of a photodetector unit using the TFT ambient light photosensor. Fig. 3 shows the voltage-time curve at both ends of a capacitor included in the circuit diagram of Fig. 2 with different brightness levels.

The TFT ambient light photosensor has the same structure as another TFT serving as a switching element in the active-matrix LCD display panel. Referring to Fig. 1, an ultra-low dark current flows in the TFT ambient light photosensor in the gate-off state when it is light-shielded, and a leakage current increases depending on the intensity (brightness) of light shed on the channel region. Referring to the circuit diagram of a photodetector unit 33 in Fig. 2, a constant reverse bias voltage (e.g. -10 V) is applied to the gate electrode G_{L} of the TFT ambient light photosensor to turn it into the gate-off state, a capacitor C is coupled in parallel between the drain electrode D_{L} and the source electrode S_{L}, and a constant voltage Vs (e.g. +2 V) is applied to both ends of the capacitor C with a switching element SW turned on. Subsequently, when the switching element SW is turned off, the voltage on both ends of the capacitor C decreases as time passes depending on the brightness of the surroundings of the TFT ambient light photosensor as shown in Fig. 3. Accordingly, since the voltage on both ends of the capacitor C is inversely proportional to the surrounding brightness of the TFT ambient light photosensor, the surrounding brightness is calculated by measuring the voltage after a predetermined time period to after the switching element SW is turned off.

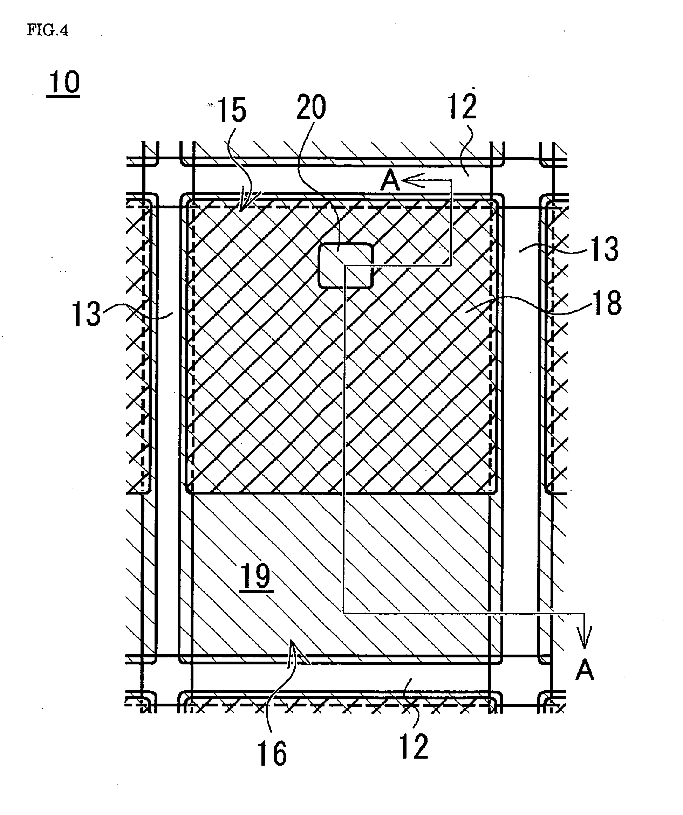

Referring next to Figs. 4 through 14, a method for manufacturing the semi-transmissive LCD as an example of an active-matrix display, a method for manufacturing a photodetector unit including above-referenced TFT ambient light photosensor, and the configuration of the semi-transmissive LCD will be described.

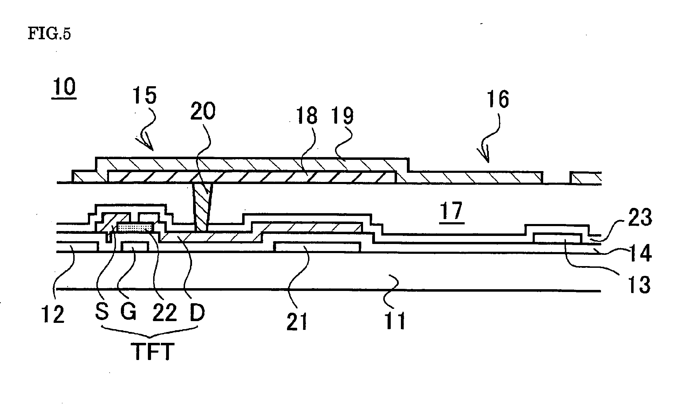

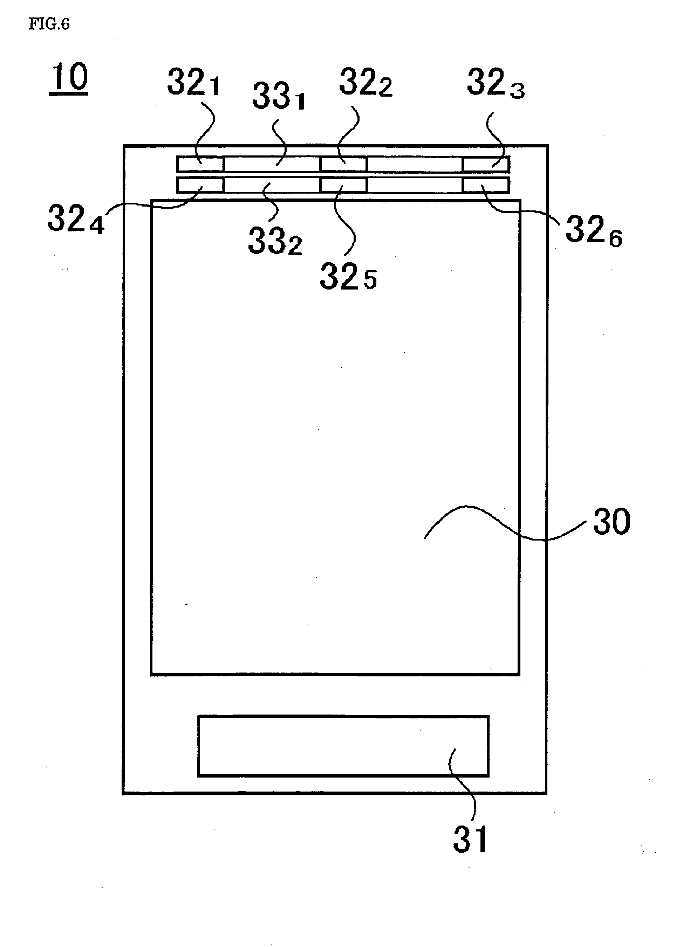

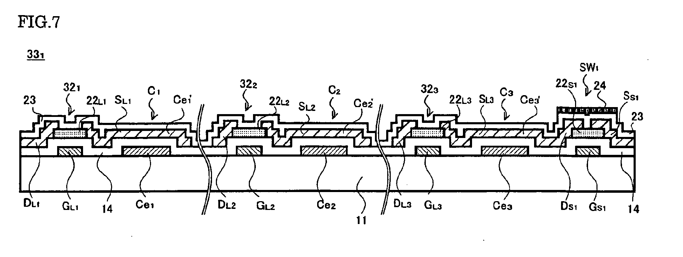

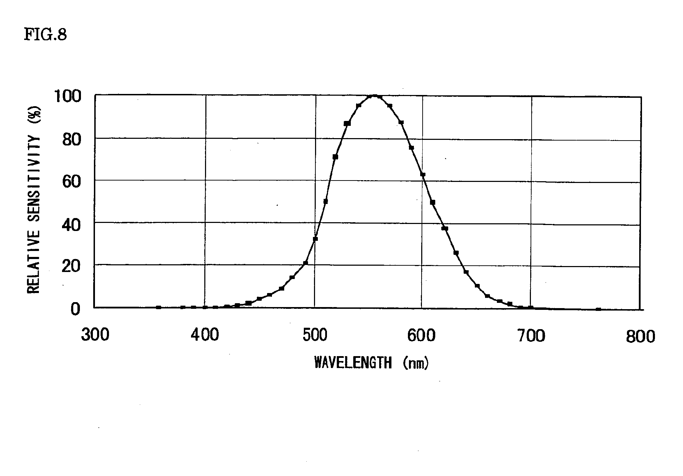

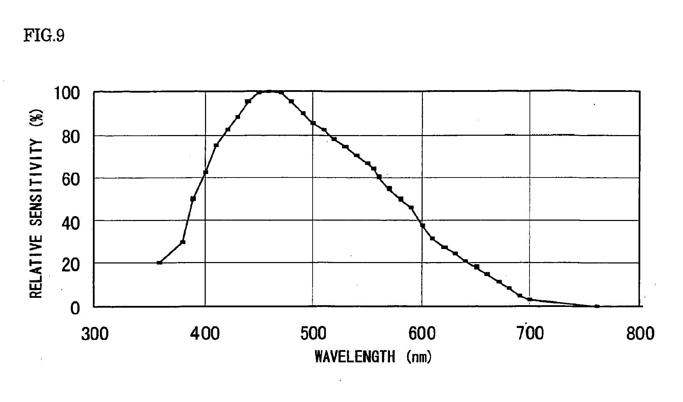

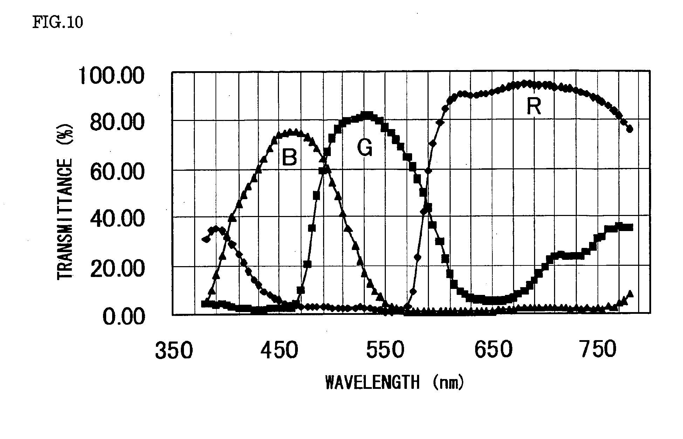

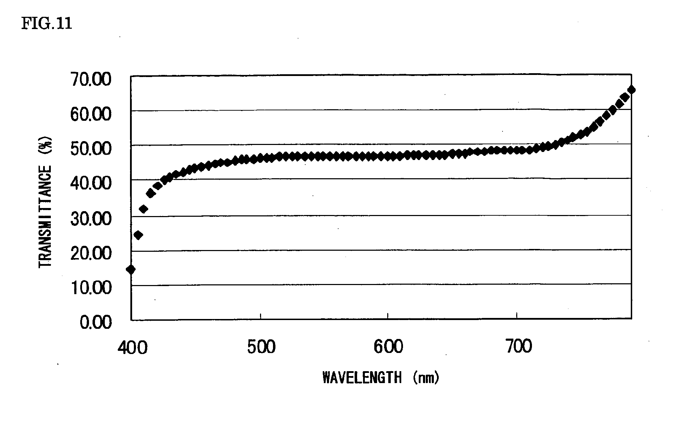

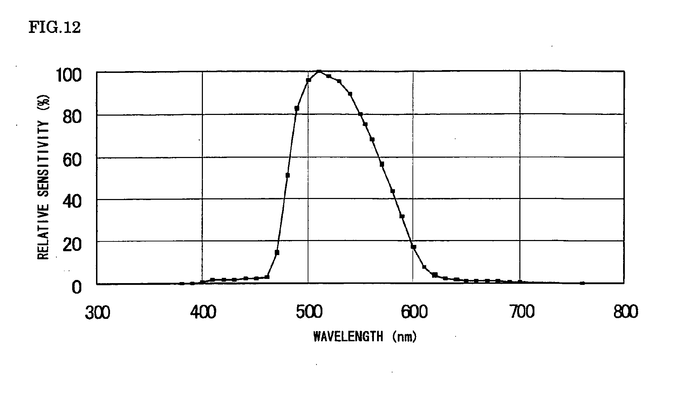

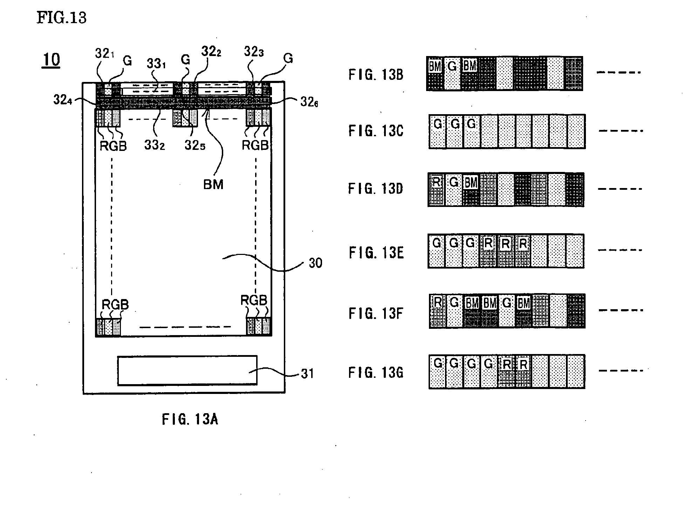

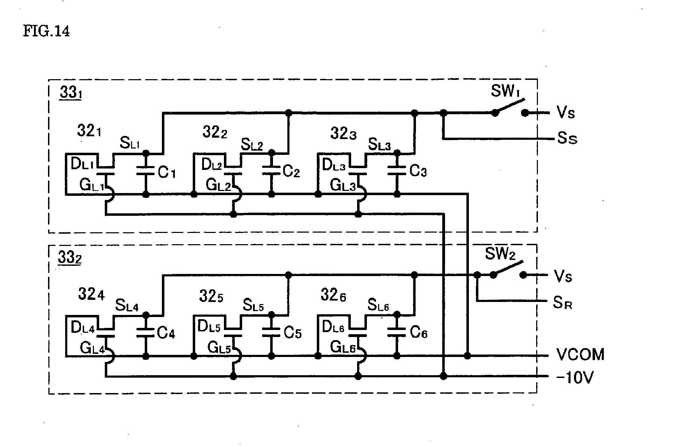

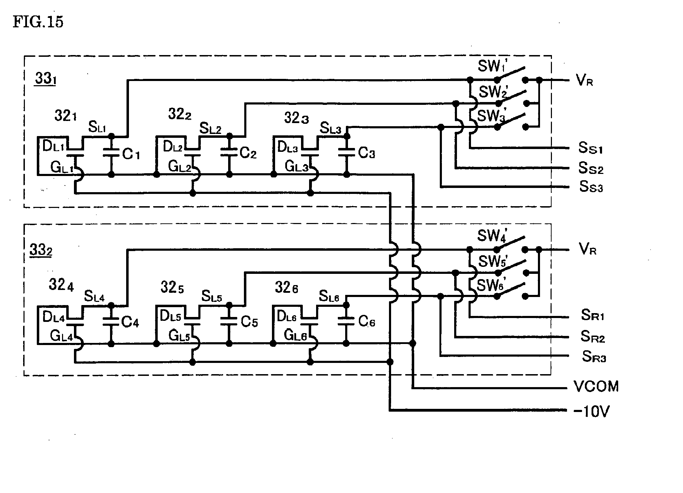

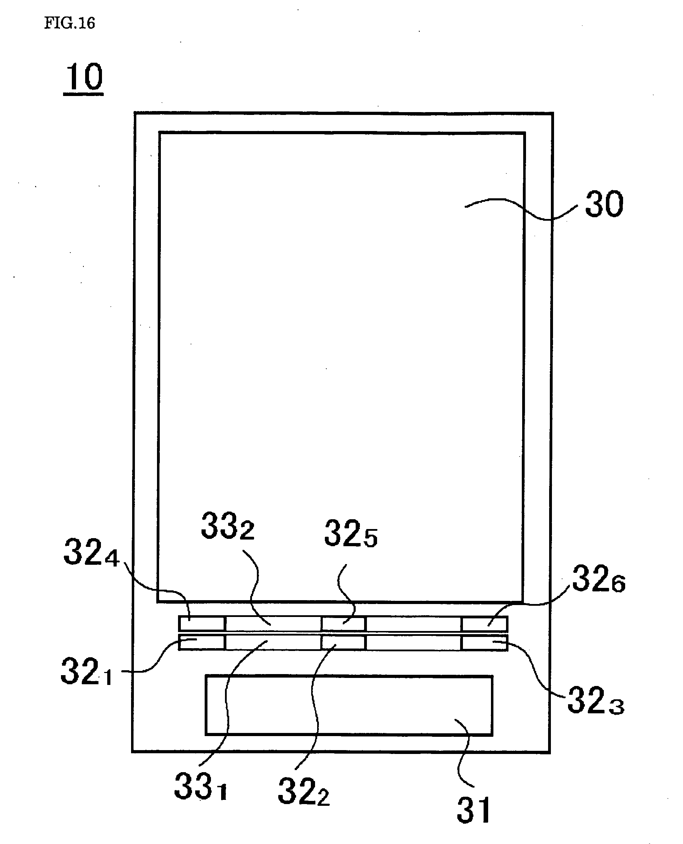

Fig. 4 is a plan view showing a single pixel seen through a color filter substrate included in the semi-transmissive LCD. Fig. 5 is a sectional view along the line A-A of Fig. 4 with the color filter substrate removed. Fig. 6 is a plan view of the semi-transmissive LCD. Fig. 7 is a sectional view of the photodetector unit. Fig. 8 shows human visual sensitivity. Fig. 9 shows the spectral sensitivity of ambient light photosensors according to the present embodiment. Fig. 10 shows the spectral transmittance of R, G, and B color filters included in an LCD panel. Fig. 11 shows the spectral transmittance of a polarizing filter. Fig. 12 shows the spectral sensitivity of the ambient light photosensors according to the embodiment that is compensated by the G color filter and the polarizing filter. Fig. 13A is a plan view of the semi-transmissive LCD including color filter layers according to the embodiment, Fig. 13B is an enlarged view of the color filters on the ambient light photosensors shown in Fig. 13A, and Figs. 13C to 13G show modifications of Fig. 13B. Fig. 14 is a circuit diagram showing an example of electrical coupling of a plurality of photodetector units. Fig. 15 shows a modified example of the circuit diagram of Fig. 14. Fig. 16 shows a modified example of the semi-transmissive LCD shown in Fig. 6.

Referring to Figs. 4 and 5, this semi-transmissive LCD 10 includes, on a display area of a transparent insulating glass substrate 11, a plurality of scanning lines 12 made of metal, such as aluminum or molybdenum, aligned in parallel at regular intervals, and auxiliary capacitance lines 21 each of which is provided in almost the middle of two adjacent scanning lines 12 in parallel with the scanning lines 12. Provided extendedly from each scanning line 12 is a TFT gate electrode G.

Also on the glass substrate 11, a gate insulator 14 made of silicon nitride or silicon oxide, for example, is deposited to cover each scanning line 12, auxiliary capacitance line 21, and gate electrode G. Provided over the gate electrode G with the gate insulator 14 therebetween is a semiconductor layer 22 made of amorphous silicon or polycrystalline silicon, for example. Also provided on the gate insulator 14 are a plurality of signal lines 13 made of metal, such as aluminum or molybdenum, aligned perpendicularly to the scanning lines 12. Provided extendedly from each signal line 13 is a TFT source electrode S. The source electrode S is in contact with the semiconductor layer 22. Further provided on the gate insulator 14 is a drain electrode D made of the same material for and together with each signal line 13 and source electrode S. The drain electrode D is also in contact with the semiconductor layer 22.

Each of the areas surrounded by the scanning lines 12 and the signal lines 13 is a single pixel. Each pixel has a TFT serving as a switching element including the gate electrode G, gate insulator 14, semiconductor layer 22, source electrode S, and drain electrode D. Here, the drain electrode D and auxiliary capacitance line 21 constitute an auxiliary capacitance for each pixel.

A protective insulator 23 made of an inorganic insulating material, for example, is deposited to cover each signal line 13, TFT, and the gate insulator 14. On top of the protective insulator 23, an interlayer 17 made of an organic insulator is deposited. The interlayer 17 has a finely protruded and recessed surface (not shown in Figs. 4 and 5) in a reflective part 15 and a flat surface in a transmissive part 16. At a position corresponding to the TFT drain electrode D, a contact hole 20 is formed through the protective insulator 23 and interlayer 17. Provided above the contact hole 20 and a part of the surface of the interlayer 17 in the reflective part 15 of each pixel is a reflective electrode 18 made of aluminum metal. Provided on the surface of the reflective electrode 18 and of the interlayer 17 in the transmissive part 16 is a pixel electrode 19 made of indium tin oxide (ITO), for example.

Below the glass substrate 11, a backlight or side light (not shown) employing a publicly known light source, light-guide plate, and diffusing filter etc. is provided. Furthermore, an alignment layer (not shown) is deposited on the surface of the pixel electrode 19 to cover all the pixels. A color filter substrate (not shown) having three R, G, and B color filters and an opposing electrode, for example, is placed face to face with the glass substrate 11. The two substrates are bonded together with a sealing material provided around the substrates, and thereafter crystal is injected between the substrates, which completes the semi-transmissive LCD 10.

A transmissive LCD is manufactured by the above-referenced manufacturing method by excluding the process to provide the reflective electrode 18. Alternatively, a reflective LCD is manufactured by thoroughly providing the reflective electrode 18 below the pixel electrode 19. For the reflective LCD, a front light is used in place of the backlight or side light.

The semi-transmissive LCD 10 according to this embodiment includes the scanning lines 12, signal lines 13, and pixel electrodes 19, for example, arranged in a matrix to form a display area 30 as shown in Fig. 6. Provided along one side of the periphery of the display area 30 is a driver integrated circuit (IC) 31 for driving the semi-transmissive LCD 10. Provided along another side of the display area 30 are two arrays of photodetector units 33₁ and 33₂ integrally including a plurality of TFT ambient light photosensor units arranged in two arrays (e.g. six TFTs, each three of which are aligned in an array), a capacitor C, and a TFT serving as a switching element SW.

Of the two arrays of photodetector units 33₁ and 33₂, the photodetector units 33₁ on the outer row of the display area 30 has unshielded TFT ambient light photosensors 32₁ to 32₃ and the photodetector units 33₂ on the inner row has light-shielded TFT ambient light photosensors 32₄ to 32₆. Since both units are configured in a similar manner except for the light shielding of their ambient light photosensors, the unshielded photodetector units 33₁ on the outer row will be taken as an example in the following description to show its configuration in greater detail.

Referring to Fig. 7, gate electrodes G_{L1} to G_{L3} of the TFT ambient light photosensors, first electrodes Ce₁ to Ce₃ of capacitors C₁ to C₃, and a gate electrode G_{S1} included in a TFT serving as a first switching element SW₁ are provided to form the photodetector units 33₁ on the surface of the glass substrate 11. Covering these elements, the gate insulator 14 made of silicon nitride or silicon oxide, for example, is deposited.

Provided over the gate electrodes G_{L1} to G_{L3} of the TFT ambient light photosensors 32₁ to 32₃ and the gate electrode Gsi included in the TFT serving as the first switching element SW₁ with the gate insulator 14 therebetween are semiconductor layers 22_{L1} to 22_{L3} and 22_{S1} made of amorphous silicon or polycrystalline silicon, for example. Also, source electrodes S_{L1} to S_{L3} and drain electrodes D_{L1} to D_{L3} made of metal, such as aluminum or molybdenum, of the TFT ambient light photosensors 32₁ to 32₃, respectively, are provided on the gate insulator 14 so as to be in contact with the semiconductor layers 22_{L1} to 22_{L3}, respectively. In the same manner, a source electrode Ssi and a drain electrode Dsi included in the TFT serving as the first switching element SW₁ are provided on the gate insulator 14 so as to be in contact with the semiconductor layer 22_{S1}.

The source electrodes S_{L1} to S_{L3} of the TFT ambient light photosensors 32₁ to 32₃ are extended to provide second electrodes Ce₁' to Ce₃' of the capacitors C₁ to C₃. The source electrode S_{L3} of the TFT ambient light photosensor 32₃ is coupled to the drain electrode D_{S1} included in the TFT serving as the first switching element SW₁.

Furthermore, the protective insulator 23 made of an inorganic insulating material, for example, is deposited to cover the TFT ambient light photosensors 32₁ to 32₃, the capacitors C₁ to C₃, and the TFT serving as the first switching element SW₁. The surface of the first switching element SW₁ is covered by a black matrix 24 to prevent the element from being influenced by outside light.

Elements in the photodetector unit 33₁ integrally including the TFT ambient light photosensors 32₁ to 32₃, the capacitors C₁ to C₃, and the TFT serving as the first switching element SW₁ are given the same numerals as the corresponding insulators in Figs. 5 and 7 and the same numerals followed by subscripts as the corresponding TFT elements. Therefore, it should be easily understood that they can be manufactured together with another TFT for switching the display area 30.

Of the photodetector units 33₁ and 33₂ arranged in two arrays as shown in Fig. 6 in the present embodiment, the array of photodetector units 33₂ that are on the inner side of the display area 30 are covered by a black matrix to shield light, at least on the surfaces of the gate electrodes G_{L4} to G_{L6} of the TFT ambient light photosensors 32₄ to 32₆. This structure prevents outputs from the photodetector units 33₂ from being affected by outside light, thereby providing dark-field outputs.

Alternatively, it is possible to use another black matrix (not shown) provided around the color filter substrate to shield light. In this case, it is possible to cover the TFT ambient light photosensors 32₄ to 32₆ with this black matrix provided to the display area in the display simply by enlarging the matrix slightly. Thus there is no need to provide another means for shielding light, thereby reducing complexity in the structure and appearance.

Referring now to Figs. 8 and 9, human visual sensitivity (relative visual sensitivity) and the spectral sensitivity of the TFT ambient light photosensors 32₁ to 32₃ will be illustrated. As shown in Fig. 8, the human visual sensitivity is highest in the green region with wavelengths around 550 nm, and becomes lower with shorter or longer wavelengths. In general terms, visible light means light with wavelengths ranging from about 380 to 780 nm. Within this range, a principle range of human visibility is from about 400 to 700 nm. Referring next to Fig. 9, the relative sensitivity of the TFT ambient light photosensors 32₁ to 32₃ used in the present embodiment ranges from about 350 nm (ultraviolet region) to 700 nm and more, with its peak around 460 nm.

Since the TFT ambient light photosensors 32₁ to 32₃ according to this embodiment sense the ultraviolet region, which is beyond human sensitivity, they may consider an environment under mercury lamps, emitting light containing a high percentage of short-wavelength components that are visually perceived as dark, to be bright. Accordingly, the following solution is applied in this embodiment to make the relative sensitivity of the TFT ambient light photosensors 32₁ to 32₃ similar to the human visual sensitivity.

Fig. 10 shows the spectral transmittance of red (R), green (G), and blue (B) color filters included in a typical LCD panel. The G color filter transmits light with wavelengths ranging from about 460 to 640 nm and only slightly transmits light with wavelengths of about 450 nm or less. Therefore, by making incident light to the TFT ambient light photosensors 32₁ to 32₃ used in the present embodiment enter at least G color filter layers among typical color filters for an LCD panel, the TFT ambient light photosensors 32₁ to 32₃ has no substantial sensitivity to light with wavelengths of about 450 nm or less, thereby representing spectral sensitivity characteristics similar to the human visual sensitivity.

Fig. 11 shows the spectral transmittance of a polarizing filter typically used on the display side of the LCD panel. The polarizing filter on the display side does not substantially transmit light with wavelengths of 400 nm or less. Therefore, by making incident light to the TFT ambient light photosensors 32₁ to 32₃ also enter the polarizing filter, the TFT ambient light photosensors 32₁ to 32₃ represents spectral sensitivity characteristics more similar to human visual sensitivity. Fig. 12 shows the spectral sensitivity of the TFT ambient light photosensors 32₁ to 32₃ that is compensated by the G color filter layers and the polarizing filter. The spectral sensitivity shown in Fig. 12 has the characteristics similar to the human visual sensitivity shown in Fig. 8.

Fig. 13A is a plan view of the semi-transmissive LCD 10 including color filter layers according to the embodiment in which G color filter layers are used to compensate the TFT ambient light photosensors 32₁ to 32₃. Fig. 13B is an enlarged view of the color filters on the TFT ambient light photosensors 32₁ to 32₃ shown in Fig. 13A. The TFT ambient light photosensors 32₄ to 32₆ in this semi-transmissive LCD 10 is light-shielded by enlarging a black matrix BM provided around the color filter substrate slightly. The G color filter layers are extended to a position of the photodetector unit 33₁, so that the layer is placed at least above the TFT ambient light photosensors 32₁ to 32₃. While the R and B color filters serve as the black matrix BM here, these areas may be occupied by G filter layers as shown in Fig. 13C.

Alternatively, it is possible to use R and B color filter layers appropriately depending on the spectral sensitivity of the ambient light photosensors so as to make the spectral sensitivity of the ambient light photosensors similar to human visual sensitivity. For example, when only using G color filters to compensate the spectral sensitivity of TFT ambient light photosensors, its peak wavelength comes around 500 nm. To have the peak wavelength of the spectral sensitivity of TFT ambient light photosensors of 550 nm, which is the peak wavelength of the human visual sensitivity, R color filters are preferably used together. In this case, the color filter layers provided on the TFT ambient light photosensors 32₁ to 32₃ may be arranged in a recurrent combination of R, G, and BM in this order as shown in Fig. 13D, or may be arranged in a recurrent combination of three consecutive G filters and three consecutive R filters as shown in Fig. 13E. Since the compensation made by R filters can be sufficiently small to have a desired effect, some R filters may be replaced in the recurrent combination of R, G, and BM as shown in Fig. 13F, and the color filter layers may be arranged in a recurrent combination of four consecutive G filters and two consecutive R filters as shown in Fig. 13G.

Referring now to Fig. 14, an example of electrical coupling of the photodetector units 33₁ and 33₂ according to the present embodiment will be described. According to this embodiment, the source electrodes S_{L1} to S_{L3} of the TFT ambient light photosensors 32₁ to 32₃, respectively, of the photodetector unit 33₁ coupled in parallel to each other are coupled to the constant voltage Vs (e.g. +2 V) via the first switching element SW₁ and signals are output therefrom through a signal wire Ss. The gate electrodes G_{L1} to G_{L3} coupled in parallel to each other are applied with a constant reverse bias voltage (e.g. -10 V). The drain electrodes D_{L1} to D_{L3} coupled in parallel to each other are coupled to a predetermined voltage source VCOM.

In the same manner, the source electrodes S_{L4} to S_{L6} of the TFT ambient light photosensors 32₄ to 32₆, respectively, of the photodetector unit 33₂ coupled in parallel to each other are coupled to the constant voltage Vs via a second switching element SW₂ and signals are output therefrom through a signal wire S_{R}. The gate electrodes G_{L4} to G_{L6} coupled in parallel to each other are applied with the same constant reverse bias voltage as applied to the counterparts in the photodetector unit 33₁. The drain electrodes D_{L4} to D_{L6} coupled in parallel to each other are coupled to the predetermined voltage source VCOM, which is common to the photodetector unit 33₁.

In this embodiment, the signal wire Ss receives average outputs of the unshielded TFT ambient light photosensors 32₁ to 32₃, while the signal wire S_{R} receives average outputs of the light-shielded TFT ambient light photosensors 32₄ to 32₆. It is therefore possible to produce, by processing the signals that the signal wire Ss and signal wire S_{R} receive, average outputs of the unshielded TFT ambient light photosensors 32₁ to 32₃ based on average outputs of the light-shielded TFT ambient light photosensors 32₄ to 32₆.

Using the outputs, a publicly known controller controls on/off of the lighting unit. It is noted that the signals that the signal wire Ss and signal wire S_{R} receive may be processed to work out differential outputs or processed to correspond to a predetermined relationship. The controller may be provided near the photodetector units 33₁ and 33₂ or in the driver IC 31.

Since the unshielded TFT ambient light photosensors 32₁ to 32₃ are arranged in a row at regular intervals along the periphery of the display area 30 as shown in Fig. 6, it is less likely that all of the TFT ambient light photosensors 32₁ to 32₃ are light-shielded when the user carelessly shields light to the TFT ambient light photosensors 32₁ to 32₃ with his fingers. Therefore, average outputs of the TFT ambient light photosensors 32₁ to 32₃ do not fluctuate significantly, whereby the brightness of the backlights will not vary frequently.

Furthermore, the spectral sensitivity of the TFT ambient light photosensors 32₁ to 32₃ is made to match the human visual sensitivity according to the present embodiment, it is unlikely that the lighting unit is turned on/off under mercury lamps, which emit light sensed by the ambient light photosensors but visually perceived as dark, for example.

The light-shielded TFT ambient light photosensors 32₄ to 32₆ are provided to compensate temperature characteristics of the unshielded TFT ambient light photosensors 32₁ to 32₃, whose photo-sensing characteristics can be changed largely depending on temperature. The above-referenced feature can control on/off of the backlights accurately at a predetermined brightness level irrespective of temperature. If this temperature compensation is not required, the light-shielded photodetector unit 33₂ and TFT ambient light photosensors 32₄ to 32₆ etc. can be omitted.

In this case, since the capacitors C₁ to C₃ and capacitors C₄ to C₆ are respectively coupled in parallel to each other, each of the combinations may be replaced with a single capacitor. However, such a single capacitor requires a large capacity, it is preferable to have multiple capacitors as shown in Figs. 7 and 14.

As a modification of the present embodiment, as shown in Fig. 15, the source electrodes S_{L1} to S_{L3} of the TFT ambient light photosensors 32₁ to 32₃, respectively, of the photodetector unit 33₁ are independently coupled to the common constant voltage Vs (e.g. +2 V) via first to third switching element SW₁ to SW₃ and also independently coupled to output wires Ssi to S_{S3}. The gate electrodes G_{L1} to G_{L3} coupled in parallel to each other are applied with a constant reverse bias voltage (e.g. -10 V). The drain electrodes D_{L1} to D_{L3} coupled in parallel to each other are coupled to the predetermined voltage source VCOM.

In the same manner, the source electrodes S_{L4} to S_{L6} of the TFT ambient light photosensors 32₄ to 32₆, respectively, of the photodetector unit 33₂ are independently coupled to the common constant voltage Vs, which is common to the photodetector unit 33₁, via fourth to sixth switching element SW₄ to SW₆ and also independently coupled to output wires S_{R1} to S_{R3}. The gate electrodes G_{L4} to G_{L6} coupled in parallel to each other are applied with the same constant reverse bias voltage as applied to the counterparts in the photodetector unit 33₁. The drain electrodes D_{L4} to D_{L6} coupled in parallel to each other are coupled to the predetermined voltage source VCOM, which is common to the photodetector unit 33₁.

In this modification, the output wires S_{S1} to S_{S3} provide outputs of the TFT ambient light photosensors 32₁ to 32₃ of the unshielded photodetector unit 33₁. Accordingly, when the user shields light to any of the TFT ambient light photosensors 32₁ to 32₃ with his fingers, either of the outputs from the output wires S_{S1} to S_{S3} becomes significantly different from other outputs, enabling the user to know which ambient light photosensor he has light-shielded. An average value calculated by a controller (not shown) with the different value from others excluded becomes approximately the same as an average value before the user shielded light to either of the ambient light photosensors. Accordingly, the brightness of the surroundings is considered to be unchanged, whereby the brightness of the backlights is prevented from varying frequently.

In this modification, the light-shielded photodetector unit 33₂ has the same feature as that of the unshielded photodetector unit 33₁. Accordingly, the light-shielded photodetector unit 33₂ can be economically provided simply by covering the surface of the unshielded photodetector unit 33₁ with a black matrix without providing an exclusive configuration for the light-shielded photodetector unit 33₂ that differs from the unshielded photodetector unit 33₁. Furthermore, since ambient light photosensors of the same lot are typically used for both, they have few variations in their characteristics.

It is also noted that since outputs of the TFT ambient light photosensors 32₄ to 32₆ of the light-shielded photodetector unit 33₂ do not significantly change even if the user shields light to the ambient light photosensors 32₄ to 32₆ with his fingers, the light-shielded photodetector unit 33₂ may have a configuration including a single switching element and a single output wire with the source electrode S_{L4} to S_{L6} of the ambient light photosensors 32₄ to 32₆ coupled in parallel to each other as shown in Fig. 14.

In the above-referenced embodiment and modification, each of the unshielded photodetector unit 33₁ and the light-shielded photodetector unit 33₂ is aligned in an array in parallel and the arrays are placed adjacent to each other. The two photodetector units 33₁ and 33₂ are placed adjacent to each other in order to avoid differences in temperatures of the units and variations in measured values, thereby controlling on/off of the lighting unit automatically and accurately at a predetermined brightness level. Alternatively, the unshielded photodetector unit 33₁ and the light-shielded photodetector unit 33₂ may be unified.

While the photodetector units 33₁ and 33₂ are provided on one side of the periphery of the display area 30 in the LCD that is remote from the other side having the driver IC 31, the photodetector units may be disposed between the driver IC 31 and the display area 30 as shown in Fig. 16 or on a side of the display area 30. To dispose the photodetector units as shown in Fig. 16 or on a side of the display area, since signal and scanning lines are provided to couple the display area 30 and the driver IC 31, it is necessary to provide the photodetector units 33₁ and 33₂ and necessary wires between the signal and scanning lines or provide a multilayered wiring structure.

While the unshielded photodetector unit 33₁ include the TFT ambient light photosensors 32₁ to 32₃ and the light-shielded photodetector unit 33₂ include the TFT ambient light photosensors 32₄ to 32₆ in the above-referenced embodiment, each of the photodetector units may include a single TFT ambient light photosensor if there is no need to take malfunction caused when the user carelessly shields light to ambient light photosensors with his fingers or when light is exposed or shielded to ambient light photosensors temporarily due to ambient factors into consideration. In addition, while TFTs are employed as the ambient light photosensors in the above-referenced embodiment, the invention is not limited to this application. For example, photodiodes, phototransistors, photo-SCRs, CdS, other photoconductors, and photocells can be also used.

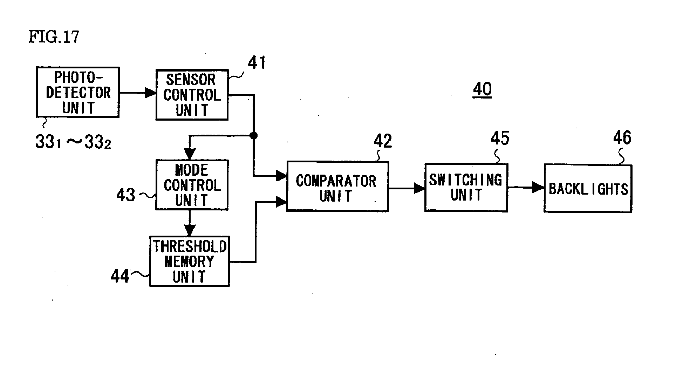

Referring next to the block diagram of Fig. 17, an example of a backlight controller 40 to control on/off of the backlights using outputs of the photodetector units 33₁ and 33₂ of the thus configured LCD 10 will be described. A sensor control unit 41 included in the backlight controller 40 applies a common reference voltage Vs (e.g. +2 V) to the source electrode Ss of the TFT serving as the switching element SW, switchingly applies a voltage (e.g. +/-10 V) for turning on/off of the TFT to the gate electrode Gs of the TFT serving as the switching element SW, applies a constant voltage (e.g. -10 V) for making the TFT ambient light photosensors operate in the gate-off state to the gate electrode G_{L} of the TFT ambient light photosensors, and applies a common potential VCOM to the drain electrode D_{L} of the TFT ambient light photosensors. The sensor control unit 41 processes outputs of the photodetector units 33₁ and 33₂ in a predetermined manner to obtain measured values based on the brightness of outside light, and inputs the values to one terminal of a comparator unit 42 and also to a mode control unit 43.

The mode control unit 43 is a circuit for switching modes between normal operation and default setting by using externally input signals. Outputs of the sensor control unit 41 are input and stored in a threshold memory unit 44 in the default setting mode, while outputs of the sensor control unit 41 are shut off in the normal operation mode. The threshold memory unit 44 outputs a threshold it stores to the other terminal of the comparator unit 42.

In normal operation mode, the comparator unit 42 compares input signals from the sensor control unit 41 and input signals from the threshold memory unit 44. When an input signal from the sensor control unit 41 is larger (brighter) than the threshold stored in the threshold memory unit 44, the backlights 46 are turned off via the operation of a switching unit 45. When an input signal from the sensor control unit 41 is smaller (darker) than the threshold stored in the threshold memory unit 44, the backlights 46 are turned on via the operation of the switching unit 45.

When the mode control unit 43 selects the default setting mode, outputs of the sensor control unit 41 are stored in the threshold memory unit 44. Accordingly, by exposing the photodetector units 33₁ and 33₂ to light of a predetermined brightness level, the memory unit stores a threshold corresponding to the brightness level. Therefore, even if the ambient light photosensors have variations in photoelectric characteristics, it is possible to control on/off of the backlights 46 accurately with a predetermined brightness threshold.

In this case, the predetermined brightness of light may be fixed in a manufacturing process, or may be set by the end user so that on/off of the backlights can be automatically controlled at a desirable brightness level. The comparator unit 42 may have hysteresis characteristics for setting different brightness levels for turning on and off the backlights so as not to control on/off of the backlights frequently. The hysteresis characteristics are easily available by using a hysteresis comparator as the comparator unit 42.

While the photodetector units 33₁ and 33₂ are provided on the peripheral edge of the display area of the glass substrate 11 in order to produce them together with the TFT serving as the switching element for the LCD panel in the above-described embodiment, they may be provided on a peripheral area within the display area. If there is no need to produce the photodetector units 33₁ and 33₂ together with the TFT serving as the switching element for the LCD panel, they may be provided outside the panel and electrically coupled to the panel through wiring, for example.

While the switching element of each of the photodetector units 33₁ and 33₂ is provided in a unified multilayer with the capacitors and so on in the above-described embodiment, it may be provided as an individual element. If the switching element is provided as an individual element, it can be placed at desirable positions, such as on the peripheral edge of the display area of the glass substrate 11, outside the panel, or within the driver IC.

The sensor control unit 41, comparator unit 42, mode control unit 43, threshold memory unit 44, and switching unit 45 may be incorporated into the driver IC in the LCD. Here, the threshold memory unit may not be provided inside the LCD 10 as long as an external host computer having a threshold memory unit is configured to initialize the LCD 10 when starting up the LCD 10.

## Claims

1. A display comprising:
a display panel having an active matrix substrate and a color filter substrate;
a lighting unit for said display panel;
a ambient light photosensor;
a controller that controls luminous intensity of said lighting unit based on an output from said ambient light photosensor; and
a spectral sensitivity adjustor for said ambient light photosensor provided at a position on said color filter substrate corresponding to said ambient light photosensor.

2. The display according to claim 1, wherein said spectral sensitivity adjustor is a color filter layer.

3. The display according to claim 2, wherein said color filter layer is in a combination of colors provided for each pixel within a display area on said display panel.

4. The display according to claim 2, wherein said color filter layer is in one of colors provided for each pixel within a display area on said display panel.

5. The display according to claim 1, wherein said spectral sensitivity adjustor is a polarizing filter layer.

6. The display according to claim 1, wherein said spectral sensitivity adjustor is a combination of a color filter layer and a polarizing filter layer.

7. The display according to claim 6, wherein said color filter layer is in a combination of colors provided for each pixel within a display area on said display panel.

8. The display according to claim 6, wherein said color filter layer is in one of colors provided for each pixel within a display area on said display panel.

9. The display according to claim 1, wherein said ambient light photosensor includes a plurality of thin-film field effect transistors,
in each of which a source electrode, a gate electrode, and a drain electrode are coupled in parallel to each other, a capacitor is coupled between said source electrode and said drain electrode, and a switching element is coupled between said source electrode and a predetermined constant voltage source.

10. The display according to any one of claims 1 to 9, wherein said lighting unit is a backlight or a side light, and said display is a transmissive liquid crystal display or a semi-transmissive liquid crystal display.

11. The display according to any one of claims 1 to 9, wherein said lighting unit is a front light, and said display is a reflective liquid crystal display.
